# EUROPEAN PATENT APPLICATION

(11) **EP 4 851 915 A1**
(43) Date of publication of application: **09.12.2026**
(21) Application number: 25300075.6
(22) Date of filing: 06.06.2025
(51) Int. Cl.: G06T 5/60, G06T 5/70

(54) **KERNEL SIZE PREDICTION FOR NEURAL-NETWORK-BASED DENOISING**

(71) Applicant: Sony Interactive Entertainment Inc., Tokyo 108-0075 (JP)
(72) Inventor: MAKRIDIS, Pavlos, Tokyo, 108-0075 (JP); LECHAT, Alexis, Tokyo, 108-0075 (JP); TREDER, Matthias, Tokyo, 108-0075 (JP); TORANO, Jesus Alejandro Zarzar, Tokyo, 108-0075 (JP)
(74) Representative: Fish & Richardson P.C.

(57) **Abstract**

Methods, systems, and apparatus for receiving data characterizing one or more pixels in an input image; and generating, for each input pixel of the one or more input pixels, one or more parameters of a corresponding kernel matrix to be applied to an input pixel of the input image to generate a corresponding output pixel, where generating, for each input pixel of the one or more input pixels, the one or more parameters of the corresponding kernel matrix include, for each input pixel of the one or more input pixels: determining, using one or more neural network modules on at least a portion of the data characterizing the one or more pixels, at least one of (i) a quantity of the one or more parameters or (ii) one or more values indicative of a spatial distribution of the one or more parameters; and determining, using the one or more neural network modules, one or more weights of the one or more parameters for the corresponding kernel matrix.

## Description

### TECHNICAL FIELD

This specification relates generally to real-time rendering of digital images and more particularly to denoising real-time renderings of digital images.

### BACKGROUND

Real-time rendering includes the relatively rapid generation of digital images (sometimes referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are rendered rapidly (e.g., ≥ 60 FPS) to improve a viewer's experience, e.g., so that content in the images is more responsive to user input. The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

### SUMMARY

This specification describes systems, methods, devices, and other technology relating to real-time rendering of digital images and more particularly, to adapting the spread and/or influence of convolutional kernels used in a denoising process for denoising real-time renderings of digital images.

In general, innovative aspects of the subject matter described in this specification can include actions of receiving data characterizing one or more pixels in an input image; and generating, for each input pixel of the one or more input pixels, one or more parameters of a corresponding kernel matrix to be applied to an input pixel of the input image to generate a corresponding output pixel, where generating, for each input pixel of the one or more input pixels, the one or more parameters of the corresponding kernel matrix include, for each input pixel of the one or more input pixels: determining, using one or more neural network modules on at least a portion of the data characterizing the one or more pixels, at least one of (i) a quantity of the one or more parameters or (ii) one or more values indicative of a spatial distribution of the one or more parameters; and determining, using the one or more neural network modules, one or more weights of the one or more parameters for the corresponding kernel matrix.

Other implementations of this aspect include corresponding systems, apparatus, and computer programs, configured to perform the actions of the methods, encoded on computer storage devices.

These and other implementations can each optionally include one or more of the following features. Determining, using the one or more neural network modules on at least the portion of the data characterizing the one or more pixels, at least one of (i) the quantity of the one or more parameters or (ii) the one or more values indicative of the spatial distribution of the one or more parameters can include determining (i) the quantity of the one or more parameters and (ii) the one or more values indicative of the spatial distribution of the one or more parameters. Determining, using the one or more neural network modules on at least the portion of the data characterizing the one or more pixels, at least one of (i) the quantity of the parameters or (ii) the one or more values indicative of the spatial distribution of the parameters can include determining the one or more values indicative of the spatial distribution for the parameters, the one or more values indicative of the spatial distribution including a grid-size for the corresponding kernel matrix. Determining, using the one or more neural network modules on at least the portion of the data characterizing the one or more pixels, at least one of (i) the quantity of the parameters or (ii) the one or more values indicative of the spatial distribution of the parameters can include determining the one or more values indicative of the spatial distribution for the parameters, the one or more values indicative of the spatial distribution including a dilation rate for the corresponding kernel matrix. Determining, using the one or more neural network modules on at least the portion of the data characterizing the one or more pixels, at least one of (i) the quantity of the parameters or (ii) the one or more values indicative of the spatial distribution of the parameters can include determining the one or more values indicative of the spatial distribution for the parameters, the one or more values indicative of the spatial distribution including one or more learned offsets for the parameters of the corresponding kernel matrix. Generating an output image can include applying the corresponding kernel matrix to each input pixel of the plurality of input pixels to generate the corresponding output pixel. The one or more neural network modules can be trained on a loss function including a regularization term based on the one or more values indicative of the spatial distribution. The data characterizing the one or more pixels can include (i) a sampled color, (ii) albedo data, (ii) surface normal data, and (iii) depth data. The portion of the data characterizing the one or more pixels can be a receptive field corresponding to one or more pixels surrounding the pixel.

In general, innovative aspects of the subject matter described in this specification can further include actions of receiving data characterizing one or more pixels in an input image, receiving data characterizing a corresponding base kernel matrix for each input pixel of the one or more input pixels of the input image to generate a corresponding output pixel, and applying, for each input pixel of the plurality of input pixels, a filter to the corresponding base kernel matrix to generate a corresponding updated kernel matrix to be applied to an input pixel of the input image, where generating, for each input pixel of the one or more input pixels, the corresponding updated kernel matrix includes, for each input pixel of the one or more input pixels: determining, using one or more neural network modules on at least a portion of the data characterizing the one or more pixels, a corresponding bandwidth for the filter; and applying the filter to the corresponding base kernel matrix to generate the corresponding updated kernel matrix.

Other implementations of this aspect include corresponding systems, apparatus, and computer programs, configured to perform the actions of the methods, encoded on computer storage devices.

These and other implementations can each optionally include one or more of the following features. For each input pixel of the one or more input pixels, the data characterizing the corresponding base kernel matrix includes a quantity of parameters of the corresponding base kernel matrix and the quantity of parameters can be the same for each input pixel of the plurality of input pixels. For each input pixel of the one or more input pixels, the data characterizing the corresponding base matrix can include a quantity of parameters of the corresponding base kernel matrix and the one or more values indicative of a spatial distribution of the parameters is the same for each input pixel of the plurality of input pixels. The data characterizing the corresponding base kernel matrix for each input of the one or more input pixels includes one or more weights of one or more parameters of the corresponding base kernel matrix and applying the filter to the corresponding base kernel matrix to generate the corresponding updated kernel matrix can include updating the one or more weights of the one or more parameters of the corresponding base kernel matrix based on the corresponding bandwidth for the filter to generate one or more updated weights for the one or more parameters. The filter can be a Gaussian filter, and the corresponding bandwidth of the filter can be a standard deviation of a Gaussian distribution. Generating an output image can include applying the corresponding kernel matrix to each input pixel of the plurality of input pixels to generate the corresponding output pixel. The one or more neural network modules can be trained on a loss function comprising a regularization term based on the one or more values indicative of the spatial distribution. The corresponding base kernel matrix can be generated by a second neural network module of the one or more neural network modules.

The present disclosure also provides a non-transitory computer-readable storage medium coupled to one or more processors and having instructions stored thereon which, when executed by the one or more processors, cause the one or more processors to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

Particular implementations of the subject matter described in this specification can be executed so as to realize one or more of the following advantages.

The technology described in this specification can dynamically predict per-pixel kernels of neural networks in an image denoising process. More specifically, in the denoising process, a quantity of parameters of each kernel, a spatial distribution of the parameters, and/or weights of the parameters can be predicted to adaptively generate kernels that are both tailored to local image structure and achieve a desired image quality of the final denoised image. Specifically, by adaptively determining the parameters of the kernels on a per-pixel basis, the denoising process can generate kernels that are structured to achieve the desired image quality in a computationally efficient manner. Unlike fixed-size kernel predicting networks used for denoising rendered digital images, the techniques described in this specification can leverage the knowledge that not every portion of an image is uniform in complexity to save computation and memory by adapting the extent that the kernel smooths the image content. The system can reduce noise in flat areas without sacrificing detail in complex regions to improve visual quality by adapting the kernel parameters to the features of the image in the local neighborhood of the pixel. For example, the system can dynamically utilize a larger kernel in flatter areas and a smaller kernel in more complex areas, maintaining visual quality while saving computation and memory by utilizing smaller kernels whenever appropriate.

Additionally, the techniques described in this specification can dynamically adapt a received base kernel to adapt the influence of the one or more parameters of the base kernel on the updated value of the pixel. In other words, the techniques described in this specification can adapt the spread of the influence of the kernel on the pixel given local image structure and features. In such implementations, the techniques can increase the image quality of a KPN that predicts a fixed filter size kernel (as described above) by updating the weights of each of the parameters of the fixed filter to adapt the spread of the influence of the kernel matrix on the pixel.

Furthermore, the techniques described in this specification can be integrated into existing frameworks with minimal modifications and can be implemented in one or more ways (e.g., with one or more different ways of applying and/or structuring the kernel), further enhancing flexibility and extendibility. For example, the techniques described in this specification can be used to predict standard kernel matrices, dilation kernel matrices, deformable kernel matrices, or adaptively alter kernel matrices to local image structure using filters (e.g., a Gaussian filter).

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGS. 1A and 1B depict diagrams representative of techniques for real-time rendering of images.
FIGS. 2A to 2E depict diagrams and images representative of noise introduced in real-time rendering of images.
FIG. 3 is an example denoising pipeline.
FIG. 4A is an example denoising pipeline, including a neural network module that generates an adaptive kernel.
FIG. 4B is an example adaptive dilation kernel.
FIG. 4C is an example adaptive deformable kernel.
FIG. 5A is an example denoising pipeline, including a neural network module that determines a filter for generating an (updated) adaptive kernel.
FIG. 5C is an example Gaussian filter for generating an (updated) adaptive kernel.
FIG. 6 is a flow diagram of an example process in accordance with implementations of the present disclosure.
FIG. 7 is a flow diagram of an example process in accordance with implementations of the present disclosure.
FIG. 8 is an example denoising pipeline 700, including an adaptive kernel-predicting neural network that includes two neural network modules 340.
FIG. 9 shows an example of a computing device and associated accessories that can be employed to execute implementations of the present disclosure.

Like reference numbers and designations in the various drawings indicate like elements.

### DETAILED DESCRIPTION

The technology of this patent application is directed to real-time rendering of digital images. More specifically, an adaptive kernel-predicting neural network can adaptively predict the spread and/or influence of a convolution kernel matrix for denoising a real-time digital image. At a high level, the adaptive kernel-predicting neural network can determine the spread and/or influence of the one or more parameters of the kernel matrix using one or more neural network modules. The one or more neural network modules can receive data characterizing the one or more pixels of the input image and process the data to determine an adaptive kernel matrix for the pixel.

To provide context for the subject matter of the present disclosure, real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. Using video games as a non-limiting example, real-time rendering enables players to see and interact with a game world that updates in real-time in response to player input (e.g., moving a character, changing a camera angle). The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

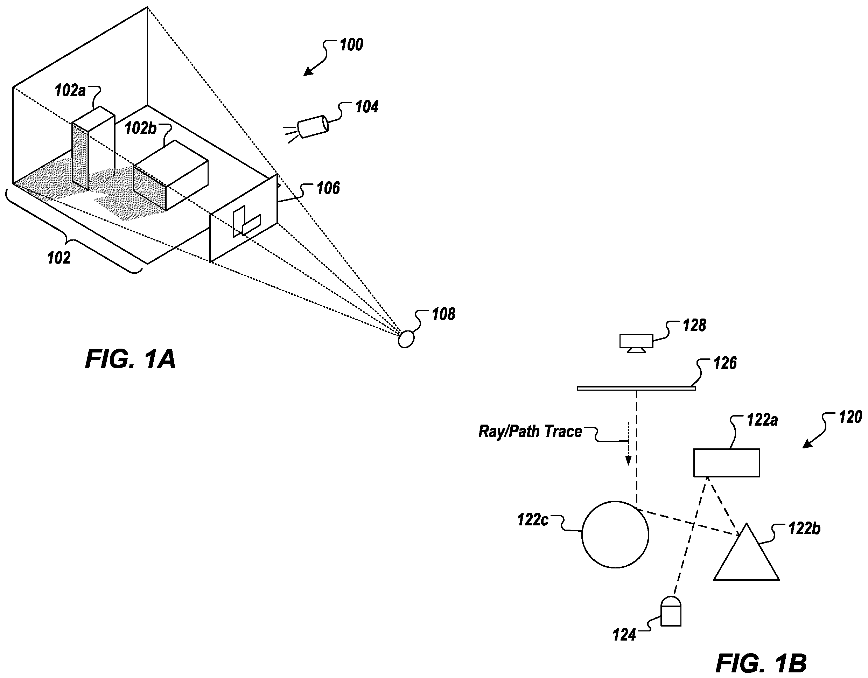

Real-time rendering of images is discussed in further detail herein with reference to FIGS. 1A and 1B, which depict schematic diagrams representative of techniques for real-time rendering of images. As used herein, the term real-time refers to execution of operations (e.g., processing data, transmitting data) without intentional delay given processing limitations of a system, the time required to accurately obtain data, store data, and the like, and any rate of change of data.

With particular reference to FIG. 1A, an environment 100 includes a multi-dimensional model 102 (a three-dimensional (3D) model) representative of a scene (e.g., a scene within a game world). For example, the multi-dimensional model 102 can be generated by an application (e.g., a video game application) and depicts objects 102a, 102b and represents interactions with and/or between the objects 102a, 102b within the scene. A light source 104 casts light on the scene that affects the appearance of the objects 102a, 102b within the scene. Although a single light source 104 is depicted, it is contemplated that multiple light sources can be provided. In the example of FIG. 1A, the light results in the objects 102a, 102b casting respective shadows.

With regard to real-time rendering, an image displayed within an image plane 106 is generated from the perspective of a camera 108. The image depicts a two-dimensional (2D) representation of the 3D scene. The image can be, for example, a frame of a series of frames to depict animation within the scene. That is, the image is regenerated at a frame-rate (e.g., ≥ 60 FPS) to depict changes in the scene over time (e.g., as the objects 102a, 102b interact with each other, as users interact with the objects, as the position of the camera 108 changes). The image is provided as a set of pixels (e.g., a 4K image (3840 x 2160 pixels), a 1080p image (1920 x 1080 pixels), a 1440p image (2560 x 1440 pixels). Each pixel is associated with a set of data that describes characteristics of subject matter that is depicted in the image (e.g., the objects 102a, 102b). Example data in the set of data can include color data (e.g., RGBA data), depth data (e.g., Z-buffer), stencil data, normal vector (surface direction), and the like.

With reference to FIG. 1B, techniques referred to as ray tracing and path tracing will be described. In general, ray tracing can be described as the operation of tracing a ray and finding its first intersection point (referred to as hit) with the geometry within the scene. Path tracing extends additional rays from hits (e.g., from the first hit determined using ray tracing) to effectively bounce around the geometry to define a light path. For clarity, the term path tracing is used for the following discussion.

Path tracing can be used for real-time rendering of high quality (e.g., photorealistic) images by simulating the manner in which light interacts with objects in a scene. FIG. 1B depicts an environment 120 representative of a scene having objects 122a, 122b, 122c. A light source 124 emits light on the scene and a camera 128 generates images of the scene. An image can be represented in an image plane 126.

Path tracing performs pixel shading to simulate global illumination to account for more complex interactions and to improve image realism. Path tracing, which includes multiple bounces within the scene along paths, simulates complex light paths including indirect lighting, color bleeding, caustics, and the like. For path tracing, each pixel requires numerous rays (tens, hundreds, thousands) to be considered in order to provide a noise-free, accurate image. This is computationally expensive and too slow for real-time rendering under realistic hardware constraints.

For each pixel, the rendering equation is approximated to determine the total outgoing light from the surface represented in the respective pixel as a function of emitted light, incoming light, material properties (e.g., mirror, glossy, matte), and geometric properties (e.g., Lambert Cosine Law). Due to the complexity of the rendering equation, which is a recursive equation, particularly when accounting for indirect lighting and multiple light-surface interactions, a direct analytical solution is not feasible.

To address the computational expense of techniques such as ray tracing and path tracing and the infeasibility of calculating the rendering equation, Monte Carlo rendering has become a widely adopted technique. Monte Carlo rendering produces photorealistic images by simulating the physical behavior of light. At a high-level, Monte Carlo rendering uses probability and randomness to approximate lighting values that would be too complex and/or too slow to compute under realistic hardware constraints.

Specifically, Monte Carlo rendering utilizes stochastic sampling to approximate solutions to the rendering equation, discussed above, which models the transport of light in a virtual scene. Monte Carlo rendering employs random sampling to estimate the integral components of light transport, where light contribution is computed based on probabilistic sampling, using functions such as the bidirectional reflectance distribution function (BRDF) to evaluate the surface response. The results from the sampled paths are averaged to estimate the color or radiance of each pixel in the image. As more samples are taken, the estimate converges toward an accurate solution, enabling realistic simulation of lighting phenomena such as soft shadows, indirect illumination, and caustics.

In achieving convergence, Monte Carlo rendering limits the number of paths (rays cast) per pixel, where each path is considered a sample. Accordingly, a metric, referred to as samples per pixel (SPP), is used to limit a number of paths (rays cast) processed for each pixel. The higher the SPP, the more computationally intensive (and slow) the processing and the better the accuracy of the rendered image. The lower the SPP, the more computationally efficient (and fast) the processing, but accuracy is lost. Further, due to its stochastic nature, Monte Carlo rendering introduces noise, which increases with lower SPPs. The more noise, the lower the visual fidelity (accuracy) of the rendered image.

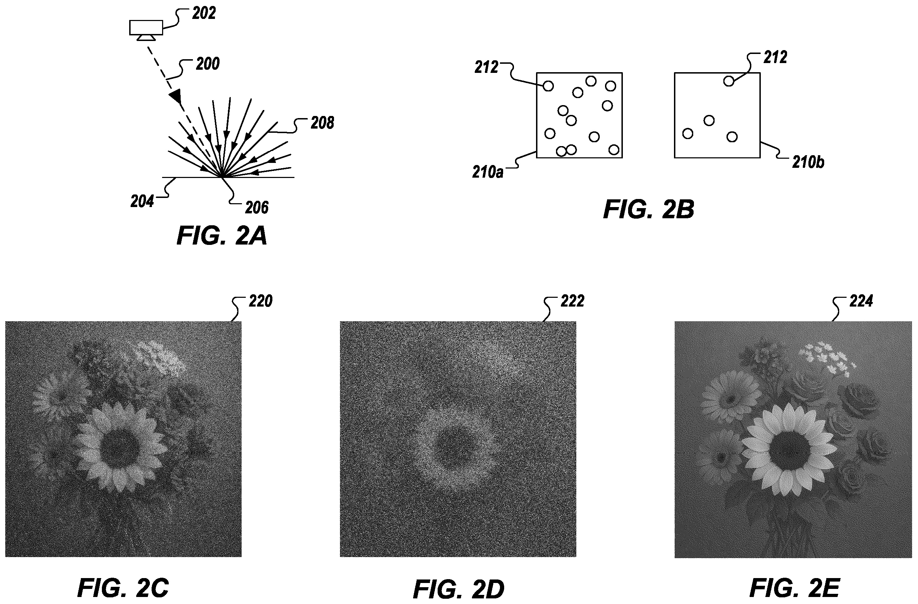

FIGS. 2A to 2E depict diagrams and images representative of noise introduced in real-time rendering of images. In the example of FIG. 2A, for a pixel, a path 200 of a ray is cast from a camera 202 and contacts a surface 204 at a point 206. Here, the surface 204 represents a surface of an object within a scene and the point 206 is the point, from which the ray is reflected to the camera 202 along the path 200. As discussed above, the rendering equation is solved for the ray to determine the outgoing light of the rays toward the camera 202. As discussed above this, among other properties, is a function of incoming light represented as incoming rays 208 (e.g., from direct light source(s), from indirect light source(s)). The ray can be one of tens, hundreds, thousands, or more rays for the pixel that could be reflected from the surface 204 at various angles. Ideally, the outgoing light for the pixel would be calculated over all of the rays with a given outgoing light for each ray. However, this is computationally infeasible, particularly under realistic hardware constraints.

To address this, and as discussed above, Monte Carlo rendering randomly samples rays (paths) to provide a sample of rays that the rendering equation is solved over. That is, Monte Carlo rendering is performed using a selected SPP to limit the number of rays (paths) considered. To further improve computational efficiency, the number of incoming rays 208 considered in the calculations can be limited. For example, techniques, such as importance sampling and multiple importance sampling can be used to limit the number of incoming rays 208 used for the calculations.

FIG. 2B depicts a pixel 210a and a pixel 210b, each pixel 210a, 210b having multiple samples 212, each sample indicating a respective ray that contributes an outgoing light value to the total outgoing light value determined for the respective pixel. In the example of FIG. 2B, the pixel 210a has a first SPP (e.g., 12 SPP) and the pixel 210b has a second SPP (e.g., 4 SPP) that is lower than the first SPP. As such, the first SPP results in a noisy image that has a higher fidelity than a noisy image resulting from the second SPP. For example, an image 220 of FIG. 2C can represent a noisy image that is generated using the first SPP and an image 222 of FIG. 2D can represent a noisy image that is generated using the second SPP. As represented in FIGs. 2C and 2D, lower SPPs result in a higher amount of noise. As such, while lower SPPs are more computationally efficient, they result in images having higher amounts of noise and thus, less accurate (lower fidelity) images.

For real-time rendering applications, denoising is used to maintain visual fidelity (accuracy) and computational performance. At a high-level, denoising includes applying a denoiser to noisy images to smooth out the noise and produce a cleaner, more visually accurate image (i.e., an output image that is less noisy than an input image). Denoising can include spatial filtering based on neighboring pixels and temporal filtering based on pixels from previous frames. In some cases, denoising can include using machine learning (ML) models that are trained to reconstruct higher quality images from lower quality, noisy images. With reference to FIG. 2D, an image 224 can be provided as a denoised image of one of the images 220, 222 of FIGs. 2C and 2D, respectively.

In Monte Carlo rendering, denoising can be implemented in various ways. For example, CNNs are commonly used for denoising Monte Carlo renderings and are often included in Monte Carlo rendering pipelines. A CNN is a deep-learning model that is designed to process grid-like data, e.g., images, by using convolutional layers to detect patterns and features within the data. A CNN operates on noisy, low SPP rendered images and can utilize kernel matrices in the convolutional layers as filters that slide over the image and refine pixel values based on surrounding or neighboring pixels. In other words, a kernel matrix can calculate weighted sums of pixel values to enhance important features of the image while suppressing noise. The output of a CNN is a denoised image approximating the quality of a high SPP render.

As neural denoising has become more prevalent for generating high quality rendered digital images, kernel-predicting networks (KPNs) have developed to adaptively predict kernels for denoising. More specifically, a KPN can utilize a CNN to predict a set of weights for a per-pixel kernel matrix that is applied to a local pixel neighborhood to reconstruct a final denoised digital image. These predicted per-pixel kernels can dynamically adjust weights for a particular image based on scene complexity, preserving fine details while reducing noise.

However, despite their accuracy, current KPNs can introduce significant memory and computation overhead as each pixel in the image requires its own set of predicted kernel weights and these weights scale quadratically with the filter size, making larger kernels computationally expensive and often infeasible for real-time or high resolution applications.

Consequently, current KPNs must settle for a small, fixed filter size that is uniformly applied across the image without accounting for local image structure in a region around each pixel, resulting in sub-optimal denoising performance.

In view of the foregoing, implementations of the present disclosure provide a method for generating per-pixel adaptive kernels of a KPN that adapt the spread and/or influence of the kernel based on local features of an image. The KPN is therefore adaptive such that, for a given pixel, a kernel of the KPN has a spread and/or influence indicative of a larger kernel for more flat regions and a smaller kernel for more complex regions, balancing denoising with preserving fine detail, all while considering memory and computation cost. A larger kernel can refer to, for example a spatially larger kernel (e.g., a kernel where the one or more parameters of the kernel are spread out / separated by a large space) and/or a kernel with a higher quantity of parameters. For example, a spatially larger kernel can be a kernel with 9 parameters (e.g., a 3x3 kernel matrix) but whose 9 parameters have a large spatial distribution (e.g., cover a region of the image that mimics a 10x10 grid around the pixel). As another example, a kernel with a high quantity of parameters can be a kernel with more than 25 parameters.

In some implementations, the adaptive KPN can generate an adaptive kernel matrix. In particular, for each pixel of one or more pixels of a rendered digital image, the adaptive KPN can determine at least one of (i) a quantity of the one or more parameters or (ii) one or more values indicative of a spatial distribution of the one or more parameters. The adaptive KPN can also determine one or more weights of the one or more parameters for the adaptive kernel matrix for the pixel. Then, for each pixel of the one or more input pixels, a denoising pipeline (e.g., that includes the adaptive KPN) can apply the generated kernel matrix for the given pixel to the image to generate a reconstructed (e.g., denoised) output image. In other words, the adaptive KPN can generate an adaptive kernel matrix that dictates the spread and/or influence of the neighboring pixels on the updated value of a given pixel by determining the quantity of neighboring pixels and/or spatial distribution of the pixels used.

In some implementations, the adaptive KPN can generate an updated adaptive kernel matrix. In particular, the KPN can receive data characterizing a base kernel matrix for each input pixel of the one or more pixels of the rendered digital image, and can apply, for each of the input pixels, a filter to the base kernel matrix to generate an updated kernel matrix. The adaptive KPN can determine a bandwidth for the filter and apply the filter to the base kernel matrix to generate the updated kernel matrix by applying a filter to a kernel to adjust the influence of the neighboring pixels based on their distance to the given pixel. In other words, the adaptive KPN can adapt a received kernel matrix to generate an updated kernel matrix that dictates the spread and influence of the neighboring pixels on the updated value of a given pixel by determining the bandwidth of the filter that adapts the kernel matrix.

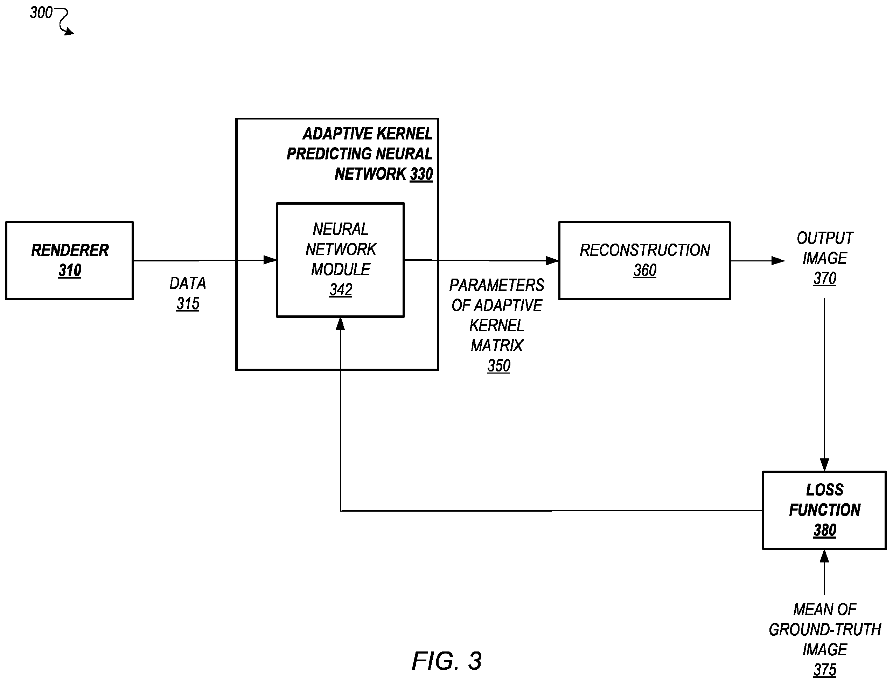

FIG. 3 is an example denoising pipeline 300. The example denoising pipeline 300 can include a renderer 310 for generating a rendered image, an adaptive kernel predicting neural network 330 including one or more neural network modules that receives data indicative of the rendered image and outputs kernels for each pixel that have parameters with weights in which the parameters have a variable spread and influence for each pixel, and a reconstruction module 360 for generating a reconstructed image.

The renderer 310 can generate a real-time rendered digital image that is denoised using an adaptive kernel predicted by the neural network 330 to generate an output image 370. The renderer 310 can generate a rendered image that is indicative of data sent to the neural network 330 as an input image. More specifically, the renderer 310 can utilize ray tracing to generate the rendered image by simulating the manner in which light interacts with objects in a scene. In particular, the renderer 310 can simulate complex light paths including indirect lighting, color bleeding, caustics, and similar phenomena by tracing the path a ray of light takes through the scene as they interact with one or more objects in the scene (e.g., reflecting, refracting, or scattering after contacting the object) in order to generate a rendered image depicting the scene. The renderer 310 can send the (rendered) input image as data 315 that characterizes one or more pixels in the input (rendered) image. For example, the renderer 310 can be a Monte Carlo renderer and can generate the input image according to the methods described above with reference to FIGS. 1A-1B and FIGS. 2A-2E. Each pixel of the rendered image can be associated with a set of data that describes characteristics of the one or more objects depicted in the image and the response of contact between a ray of simulated light and the object. The data 315 can be any data that defines a response of the one or more pixels in the (rendered) input image to simulated light, e.g., color, gradient, texture, or other characteristics indicative of the response of the pixel to simulated light. For example, the data 315 can include noisy color data (e.g., red, green, and blue color data) and/or auxiliary feature data. As a specific example, the noisy color data can be Monte Carlo sampled color data. Examples of auxiliary feature data can include albedo data, normal vector (surface direction), and depth data (e.g., Z-buffer).

In other examples, the renderer 310 can also produce intensity data (e.g., radiance or brightness values), object identifiers (to distinguish elements in the image), and bidirectional reflection distribution function (BRDF) parameters (to characterize how the light is reflected off the surfaces in the rendered image) that can be included in the data 315. The data 315 that is output from the renderer 310 are indicative of input data for the neural network 330. As shown in FIG. 3A, the renderer 310 can send the data 315 to the neural network 330, which in turn generates per-pixel adaptive kernels for denoising the image that are defined by weights of parameters of the kernels and one or more values indicative of a spread and/or influence of the weights. As described in greater detail, the one or more values indicative of the spread and/or influence of the weights are adaptive to local image structure to improve computational efficiency of denoising the image.

The neural network 330 can account for local image features during generation of the corresponding kernel matrix. The neural network 330 can account for local image structure by using the neural network 330 on a portion of the data characterizing the one or more pixels to determine the weights and to determine the one or more values indicative of the spread and/or influence of the weights. For each pixel, the portion of the data characterizing the one or more pixels can vary and can correspond to data characterizing pixels around a given pixel. For example, in some implementations, the portion of the data characterizing the one or more pixels can be a local region around the pixel. The local region can correspond to a square region having a dimension of 2, 3, 4, or more pixels. In some implementations, the size of the local region is a 5x5, 9x9, 11x11, or any NxN receptive field centered around the pixel. In some implementations, the receptive field of the neural network is fixed while the kernel size is variable. For example, the size of the local region of pixels processed by the neural network 330 can be a 9x9 region centered around the pixel for each pixel, while the neural network can independently determine the one or more values indicative of the spread and/or influence of the weights of the kernel matrix from the local region. By processing a portion of the data characterizing the one or more pixels, the one or more neural network modules can focus on local features, and not necessarily the entire image as a whole. In some implementations, the portion of the data characterizing the one or more pixels can include all of the data characterizing the one or more pixels.

The adaptive kernel matrix generated by the neural network 330 for each pixel can vary in implementations. For example, in some implementations, as described in more detail with respect to FIG. 3B, the neural network module 342 can generate an adaptive kernel by dynamically determining the quantity of the one or more parameters of the kernel matrix and/or the spatial distribution of the one or more parameters of the kernel matrix. The neural network module 342 can also determine the one or more weights of the one or more parameters of the kernel matrix to determine the influence of the one or more parameters on the updated value of the pixel. Specifically, the neural network 330 can generate, for each input pixel of the one or more pixels of the input image, a corresponding kernel matrix to be applied to an input pixel of the input image to generate a corresponding output pixel.

As another example, in some implementations, as described in greater detail with respect to FIG. 3C, the neural network module can receive data characterizing a corresponding base kernel matrix for each input pixel of the input image and generate an updated adaptive kernel matrix. More specifically, the neural network 330 can receive the image data 315 and the data characterizing the corresponding base kernel matrix and process the image data 315 to generate one or more updated adaptive kernels for the one or more pixels of the input image. In particular, the neural network 330 can generate a corresponding updated kernel matrix by determining the bandwidth of a filter to be applied to the corresponding base kernel matrix to generate the updated kernel matrix.

The quantity of the one or more neural network modules of the neural network 330 can vary in implementations. In some implementations, the neural network 330 can include one neural network module that, for example, generates parameters having weights and a spread and/or quantity dictated by the one or more values indicative of the spread and/or quantity. The one or more neural network modules of the neural network 330 can generate an adaptive kernel matrix for each of the pixels of the input image by directly processing the data 315 output from the renderer 310. In some implementations, the one or more neural network modules of the neural network 330 can generate a kernel matrix with an adaptive spread and/or influence for each of the pixels of the input image by processing the data 315 and data characterizing a base kernel matrix. For example, the neural network 330 can include two or more neural network modules, with a neural network module that initially generates a base kernel and another neural network module that updates the base kernel, thereby generating an updated base kernel.

The architecture of the one or more neural network modules can vary in implementations. The one or more neural network modules can be any type of neural network module that is configured to determine one or more parameters of a kernel matrix based on a given set of image features. For example, the one or more neural network modules can be a convolutional neural network (CNN) module.

A CNN module can include one or more neural network layers, including one or more convolutional layers. The CNN module can further include one or more additional neural network layers, including one or more activation layers, one or more normalization layers, one or more pooling layers, and one or more fully connected layers. The CNN module can have any appropriate neural network architecture. For example, the CNN module can have an encode-decoder architecture (e.g., U-Net architecture). In some implementations, the neural network 330 can include one or more other neural network layers in addition to the one or more neural network modules. Examples of other neural network layers can include down-sampling and up-sampling layers, or one or more layers that perform various operations on the rendered image. The one or more CNN modules can determine at least one of (i) the quantity of parameters, and (ii) one or more values indicative of a spatial distribution of the one or more parameters before determining (iii) one or more weights of the one or more parameters. In some implementations, a first neural network module can determine at least one of (i) the quantity of parameters, and (ii) one or more values indicative of a spatial distribution of the one or more parameters, and a second neural network module can predict the one or more weights of the one or more parameters. The second neural network module can receive the determined output of the first neural network module as input for determining the one or more weights of the one or more parameters. In some implementations, a first neural network module can predict the kernel matrix size (e.g., the quantity of the parameters and, in some implementations, one or more values indicative of a spatial distribution of the one or more parameters), while the second neural network module can predict one or more weights for a fixed quantity of one or more parameters of a kernel matrix that is larger than the predicted kernel size. The second neural network module can then discard the weights of the one or more parameters that are outside the predicted kernel size to get the adapted kernel. That is, the first neural network module can predict a kernel size (e.g., 5x5) while the second neural network module can predict weights for a kernel of a maximum size (e.g., 13x13). The second neural network module can then crop the weights to only select kernel predictions within the predicted kernel size (e.g., the 5x5 predicted kernel matrix) and discard kernel prediction outside of the predicted kernel size.

The one or more neural network modules (e.g., CNN modules) can predict the (i) quantity of the parameters, (ii) the spatial distribution of the parameters, and the (iii) weights of the one or more parameters by extracting both local and global features (e.g., edges, corners, textures, structures, or other contextual information) of the input image utilizing the one or more convolutional layers of the CNN. The one or more neural network modules can then utilize the learned features to determine the quantity, spatial distribution, and weights of the one or more parameters of the kernel matrix.

The reconstruction module 360 can receive the adaptive kernel matrices for each of the one or more pixels of the input image and can apply the adaptive kernel to the corresponding pixel to generate an output image 370. After the neural network 330 generates the adaptive kernel matrices, the reconstruction module 360 can use the adaptive kernel matrices to generate a reconstructed image that represents a denoised version of the rendered image generated by the renderer 310. For each pixel of the one or more pixels in the input image, the reconstruction module 360 can receive the parameters of the adaptive kernel matrix 350 from the one or more neural network modules of the neural network 330 and apply each of the corresponding adaptive kernel matrices to the each of the corresponding pixels of the input to generate an output image 370 corresponding to the reconstructed image. To apply the corresponding adaptive kernel matrix using the parameters of the adaptive kernel matrix 350, the reconstruction module 360 can apply the corresponding adaptive kernel matrix to the corresponding pixel and neighboring pixels based on the determined characteristics of the adaptive kernel matrix (e.g., quantity of parameters, spatial distribution of parameters, weights of the parameters, and/or filter bandwidth). Specifically, the weights of the parameters and the one or more values indicative of the spread and/or influence of the parameters define each kernel matrix. The output image 370 can be a reconstructed (e.g., denoised) image that directly corresponds to the (rendered) input image generated by the renderer 310.

The neural network 330, including the one or more neural network modules (e.g., neural network module 342), can be trained using any appropriate method, e.g., using a loss function 380. The neural network 330 can be trained on a set of training examples that include (i) a rendered input image, and (ii) a ground-truth rendered image. In some implementations, the set of training examples can further include the auxiliary information (e.g., albedo, normal and depth data) of the rendered input image. That is, the neural network 330 can be trained using a pixel-by-pixel comparison between the denoised rendered image and the ground-truth rendered image. In some implementations, the neural network 330 can be trained on a set of training examples that include (i) a denoised rendered image, and (ii) a mean of a ground-truth rendered image. Generally, the "mean" of a ground-truth image 375 refers to the mean pixel values across the entire image. That is, the neural network 330 can be trained using an image-wise pixel comparison between the denoised rendered image and the ground-truth rendered image to describe the overall difference between the images. In some implementations, the ground truth image 375 can be a denoised digital image of the same scene as the rendered digital image generated by the renderer 310. In some implementations, the ground truth image 375 can be a digital image rendered using more samples per pixel (e.g., a less noisy version of the rendered image).

The neural network 330 can be trained on any appropriate loss function 380, including a denoising loss function. For example, the loss function 380 can be a MSE loss function. In some implementations, the neural network 330 can be trained on a loss function that includes a regularization term based on one or more values of the spatial distribution of the parameters of the determined adaptive kernel. In other words, the loss function can include a regularization term that penalizes (e.g., discourages) the determination of adaptive kernels with large quantities of parameters (e.g., larger kernels). For example, the regularization term can penalize kernels that have more than 25 parameters (e.g., 5x5 kernels). However, the regularization term does not affect the spatial distribution of the kernel. In some implementations, the regularization term can be multiplied by a scalar value (e.g., lambda) where a larger lambda means the neural network is heavily biased towards smaller kernels, and a smaller lambda would allow the model to produce larger kernels. That is, the influence of the regularization term can be weighted / adapted using lambda. The lambda value can be fixed prior to training. The denoising pipeline 300 or another training system can train the neural network 330 on the loss function 380 by computing a gradient of the loss function 380 with respect to the parameters of the neural network 330, including the parameters of the one or more neural network modules 340 (e.g., through backpropagation). The training system can then apply an optimizer to the gradients to update the parameters of the neural network 330, including the parameters of the one or more neural network modules 340.

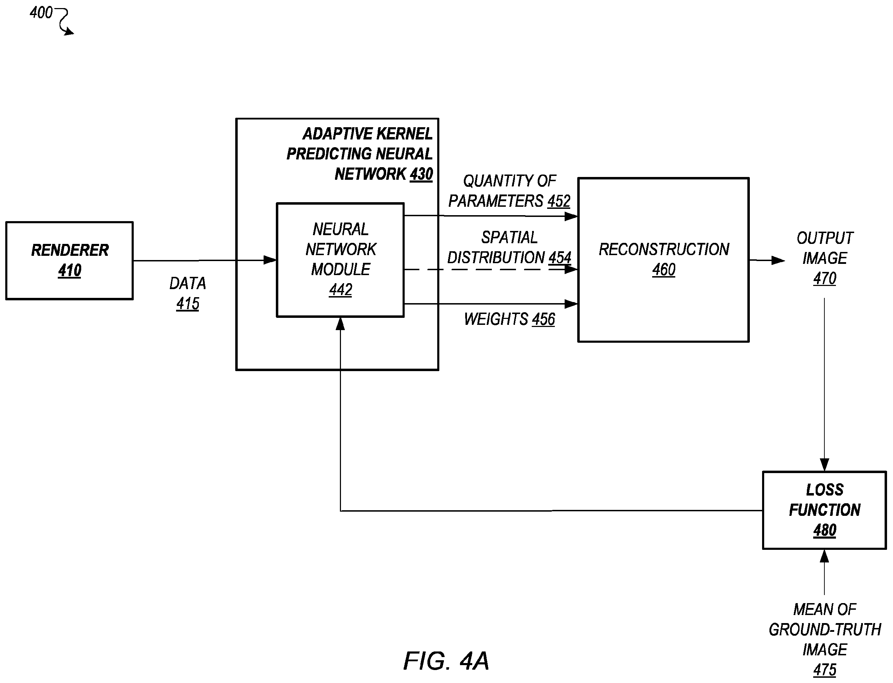

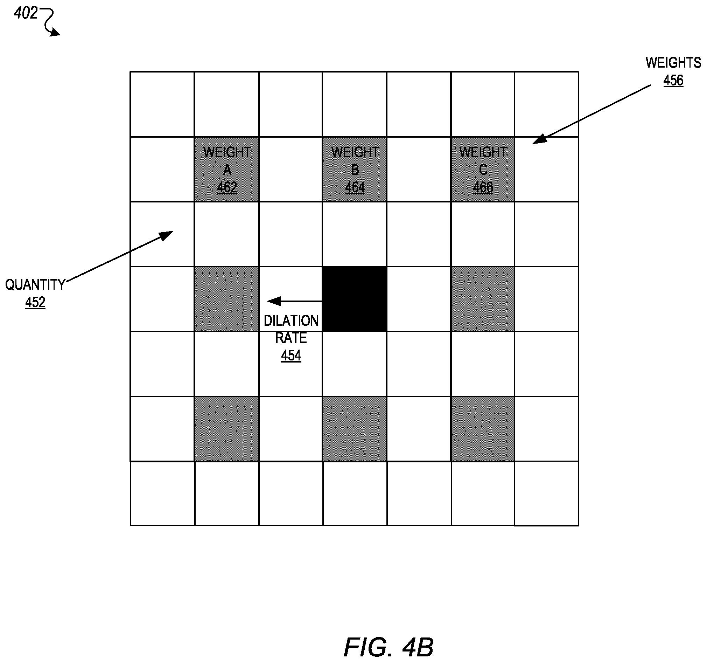

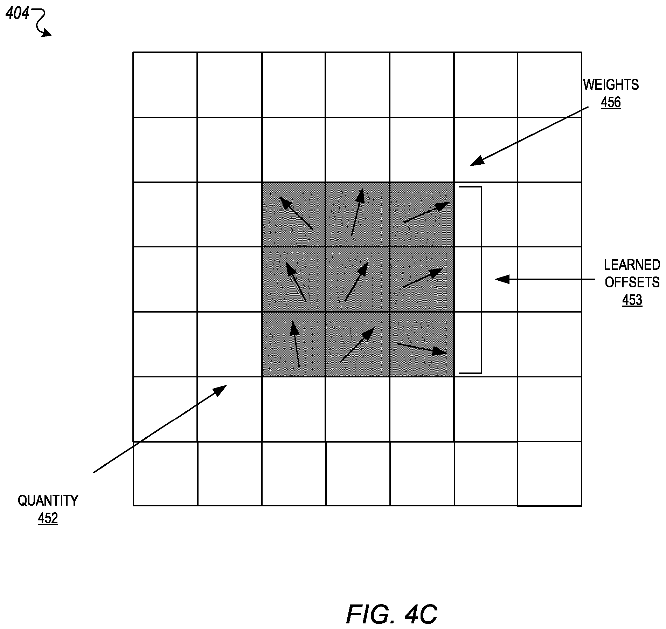

FIG. 4 is an example denoising pipeline 400, including a neural network module that generates an adaptive kernel. The denoising pipeline 400 includes a renderer 410, a neural network 430, and a reconstruction module 460 to generate an output image 470. The neural network 430 can be trained using a loss function 480. The denoising pipeline 400 provides an example of the denoising pipeline 300, with the renderer 410, the neural network 430, the reconstruction module 460, and the loss function 480 being similar to the renderer 310, the neural network 330, the reconstruction module 360, and the loss function 380 of FIG. 3. Features of the structures described in connection with FIG. 3 are therefore applicable to the analogous structures of FIG. 4. The denoising pipeline 400 provides details of the output of the neural network 430. As discussed above with respect to FIG. 4, the output of the neural network 430 determines one or more values indicative of the spread and/or influence of the parameters for each kernel matrix and then generates and outputs kernel matrices at least partially defined by the determined one or more values. In the denoising pipeline 400, the one or more values indicative of the spread and/or influence include, for example, a quantity of the one or more parameters of a kernel matrix and/or one or more values indicative of a spatial distribution of the one or more parameters.

As described above with reference to FIG. 3, in some implementations, the adaptive kernel-predicting neural network 430 can receive data 415 characterizing one or more pixels in a (rendered) input image from a renderer 410 and generate, for each input pixel, one or more parameters of a corresponding kernel matrix to be applied to an input pixel of the input image to generate a corresponding output pixel. In particular, using one or more neural network modules on at least a portion of the data characterizing the one or more pixels, the neural network 430 can determine, for each pixel of the one or more input pixels, at least one of (i) a quantity 452 of the one or more parameters of a kernel matrix or (ii) one or more values indicative of a spatial distribution 454 of the one or more parameters. In some implementations, the one or more neural network modules, e.g., neural network module 442, can determine both (i) a quantity of the one or more parameters and (ii) one or more values indicative of a spatial distribution of the one or more parameters.

The neural network 430 can determine the quantity of the one or more parameters of the kernel matrix to influence the spread and/or influence of the parameters on the pixel. The quantity of the one or more parameters of a kernel matrix corresponds to, for example, the number of pixels around the kernel that are used by the kernel to update the value of the given pixel. For example, when predicting a standard kernel for denoising, the one or more neural networks modules can determine, for each pixel of the one or more input pixels, a quantity 452 of one or more parameters of a kernel matrix. As a specific example, the one or more neural network modules, e.g., neural network module 442, can determine the quantity 452 of the one or more parameters by determining a dimension of the kernel matrix. The dimension can be, for example, a grid-size of the kernel. The grid size can be 1x1, 2x2, or larger. In some implementations, the one or more neural networks 430 can determine the quantity of the one or more parameters by determining the quantity of parameters in each row and column of the kernel matrix. For example, the kernel matrix can be a standard 3x3 kernel matrix or other kernel matrix with a fixed size, and the one or more neural networks can determine which positions within the kernel matrix include non-zero parameters. The one or more neural networks can determine the row or rows that include non-zero parameters and/or the column or columns that include non-zero parameters. In some implementations, the one or more neural networks 330 can determine the quantity of the one or more parameters by directly determining an overall quantity in the kernel, e.g., 9).

In some implementations, the neural network 430 can also determine the spatial distribution 454, or spread, of the one or more parameters of the kernel matrix to adapt the kernel matrix to the local image structure of the pixel. The spatial distribution 454 of the one or more parameters, for example, corresponds to the spread of pixels used by the kernel to update the value of the given pixel. The kernel, for example, may be sized to cover a region of pixels, and the spatial distribution can dictate the specific pixels within that region that are used to update the value of the given pixel. Examples of values indicative of the spatial distribution of the one or more parameters can include a dilation rate for dilation kernels (described in greater detail below with respect to FIG. 4B), and one or more learned offsets for a deformable kernel (described in greater detail below with respect to FIG. 4C).

As an example, when predicting a kernel for dilated convolution, the one or more neural network modules can determine (i) a quantity of the one or more parameters of the kernel, and (i) a dilation rate indicative of a spatial distribution of the one or more parameters. That is, the neural network 430 can generate an adaptive dilated kernel matrix that can control the spread and/or influence of the one or more parameters of the kernel by directly controlling the quantity, spacing of the one or more parameters through dilation rate, and weights of the one or more parameters of the kernel matrix (as described in further detail below with reference to FIG. 4B).

As another example, when predicting a kernel matrix for deformable convolution, the one or more neural network modules can determine (i) a quantity of the one or more parameters of the kernel, and (i) one or more learned offsets indicative of a spatial distribution of the one or more parameters. That is, the neural network 430 can generate an adaptive deformable kernel matrix that can control the spread and/or influence of the one or more parameters of the kernel by directly controlling the quantity, position of the one or more parameters through the one or more learned offsets of the one or more parameters, and weights of the one or more parameters of the kernel matrix (as described in further detail below with reference to FIG. 4C).

As described above in FIG. 3, the one or more neural network modules, e.g., neural network module 442, can also determine one or more weights 456 of the one or more parameters for the corresponding kernel matrix. The one or more weights 456 of the one or more parameters of the corresponding kernel matrix can dictate the influence that the values of the one or more parameters (e.g., neighboring or surrounding pixels) can have on the updated value of the pixel.

FIG. 4B is an example adaptive dilated kernel. As used in the disclosure, a dilated kernel can introduce gaps between kernel elements, enabling the kernel to process larger spatial regions without excessive blurring. More specifically, dilated kernels can act as larger kernels (e.g., capture broader contextual information), but use the same number of parameters to preserve fine details.

By adapting a dilated kernel, a neural network, e.g., the neural network 430 of FIG. 4, can adapt the spread and influence of the one or more parameters on the updated value of a particular pixel. For example, the neural network 430 can determine (i) the quantity 452 of the parameters, (ii) the dilation rate indicative of the spatial distribution of the parameters, and (ii) one or more weights 456 of the one or more parameters. The dilation rate of a dilation kernel corresponds to, for example, the spacing between kernel elements, expanding the receptive field without increasing the number of parameters. For example, a dilation rate of 1 is a standard kernel (e.g., a 3x3 matrix covers a 3x3 region). As another example, for a dilation rate of 2, every other pixel is skipped (e.g., a standard 3x3 kernel covers a 5x5 region). The dilation kernel 402 depicted in FIG. 4A has a dilation rate of 2, where every other pixel is skipped.

As seen in FIG. 4B, the dilation rate 354 and the one or more weights 356 can dictate the spread and influence of the adaptive kernel. For example, the dilation rate of 2 can spread out the determined number of parameters so that there is more distance between the parameters (e.g., the pixels used to update the value of the given pixel) and the given pixel. Similarly, the one or more weights 456 can directly affect the influence that the parameter has on the given pixel. For example, each parameter has its own respective weight (e.g., weight A 462, weight B 464, and weight C 466), which is multiplied against the pixel value at that parameter and then summed to update the given pixel value (e.g., the pixel value of the pixel in the center of the kernel) to denoise the pixel.

FIG. 4C is an example adaptive deformable kernel 404.

As used in the disclosure, a deformable kernel can introduce learned offsets to dynamically adjust the receptive field, allowing the kernel to adapt to complex spatial structures in an image. More specifically, deformable kernels can modify sampling locations (e.g., where pixel values are measured or estimated), based on the input features of the rendered image.

By adapting a deformable kernel 404, a neural network, e.g., the neural network 430 of FIG. 4A, can adapt the spread of the one or more parameters on the updated value of a particular pixel using one or more learned offsets for the one or more parameters. For the deformable kernel 404, the neural network 330 can determine (i) the quantity 452 of the parameters, (ii) the one or more learned offsets 453 indicative of the spatial distribution of the parameters, and (ii) one or more weights 456 of the one or more parameters. The learned offsets of a dilation kernel correspond to, for example, the dynamic adjusted displacement applied to standard sampling locations of a kernel matrix. More specifically, instead of using a fixed grid for the kernel matrix, the neural network can learn spatial offsets that shift the sampling positions based on input features of the image data. Each pixel in the kernel can have a respective offset. For example, each pixel in the deformable kernel 404 depicted in FIG. 4B has a different learned offset denoted by an arrow depicting the direction and placement of the new pixel sampling position.

As seen in FIG. 4C, the learned offsets and the one or more weights 456 of the parameters can dictate the spread and influence of the adaptive kernel. For example, the learned offsets can spread out the determined number of parameters so that the values of the parameters are being sampled from different locations (e.g., the values of the pixels used to update the value of the given pixel). Similarly, the one or more weights 456 can directly affect the influence that the parameter has on the given pixel. For example, each parameter has its own respective weight, which is multiplied against the pixel value at that parameter and then summed to update the given pixel value (e.g., the pixel value of the pixel in the center of the kernel) to denoise the pixel.

The neural network 430 can apply the deformable kernel to the pixel to generate an output pixel. For a deformable kernel, the predicted kernel can be applied to the adjusted sampling positions (determined by the learned offsets) using bilinear interpolation. Bilinear interpolation corresponds to, for example, to a method for estimating the value at a point using the values at the four nearest grid points. That is, instead of sampling the input at a fixed grid location (e.g., a fixed pixel), the weights 456 of the one or more parameters are applied to an adjusted position instead of the original fixed grid location. The adjusted position of the parameter is determined by the predicted learned offset corresponding to the parameter. Typically , the adjusted position is not an integer like the fixed grid position, so, to sample the adjusted position, bilinear interpolation can be used to estimate the value at the adjusted position.

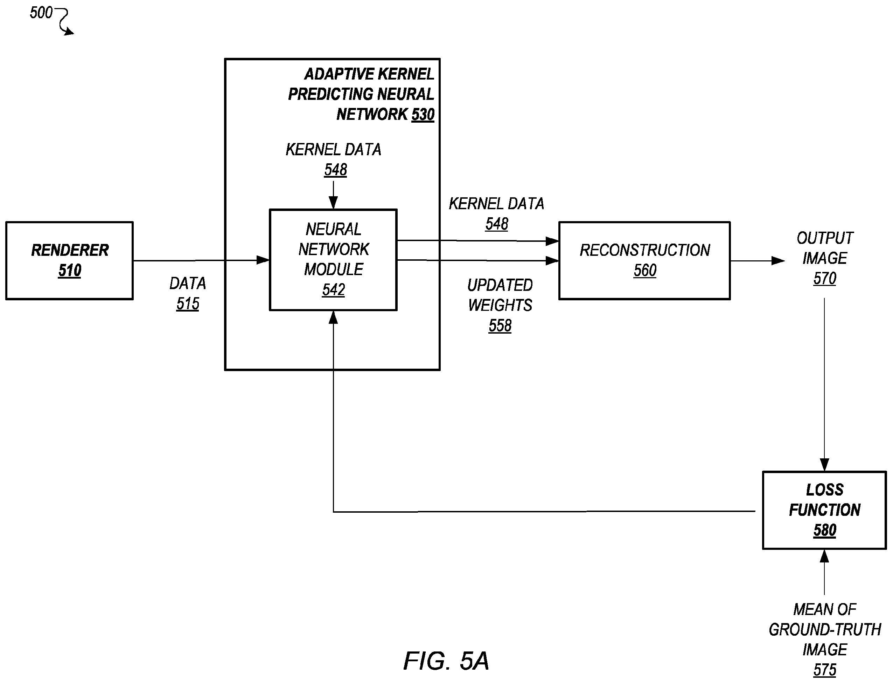

FIG. 5A is an example denoising pipeline 500, including a neural network module that determines a filter for generating an updated adaptive kernel.

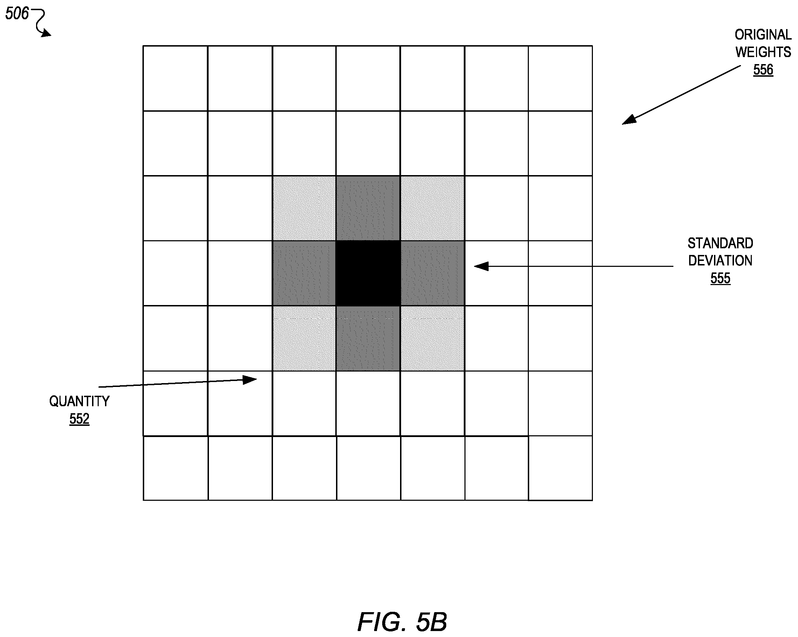

The denoising pipeline 500 includes a renderer 510, a neural network 530, and a reconstruction module 560 to generate an output image 570. The neural network 530 can be trained using a loss function 580. The denoising pipeline 500 provides an example of the denoising pipeline 300, with the renderer 510, the neural network 530, the reconstruction module 560, and the loss function 580 being similar to the renderer 310, the neural network 330, the reconstruction module 360, and the loss function 380 of FIG. 3. Features of the structures described in connection with FIG. 3 are therefore applicable to the analogous structures of FIG. 5. The denoising pipeline 500 provides details of the output of the neural network 530. As discussed above with respect to FIG. 4, the output of the neural network 530 determines one or more values indicative of the spread and/or influence of the parameters for each kernel matrix and then generates and outputs kernel matrices at least partially defined by the determined one or more values. In the denoising pipeline 500, the one or more values indicative of the spread and/or influence include, for example, a quantity of the one or more parameters of a kernel matrix and/or one or more values indicative of a spatial distribution of the one or more parameters.

The neural network 530 can receive a base kernel matrix and generate an updated kernel matrix to adapt the base kernel matrix to the local image structure of the pixel. As described above with reference to FIG. 3A, in some implementations, the neural network 530 can receive data 315 characterizing one or more pixels in a (rendered) input image from a renderer 410 and data 448 characterizing a corresponding base kernel matrix for each input pixel of the plurality of input pixels of the input image to generate a corresponding output pixel. In other words, the neural network 530 can receive a base kernel matrix in which to adapt for each pixel of the input image to dictate the spread and influence of the base kernel based on the local features surrounding the particular pixel.

The neural network 530 can receive data characterizing the corresponding base kernel matrix in a variety of ways. In some implementations, the neural network 530 can receive data characterizing a corresponding base kernel matrix for each input pixel from a second component of the neural network 530. In some implementations, the neural network 530 can receive the data characterizing the corresponding base kernel matrix for each input pixel from a second neural network module. The second neural network module can be any type of neural network module, including a convolutional neural network module.

The corresponding base kernel matrix can be any type of base kernel matrix. In some implementations, the base kernel matrix can be held fixed for each of the one or more pixels of the input image (e.g., the same quantity of parameters and the same spatial distribution of parameters). For example, in some implementations, for each input pixel of the plurality of input pixels, the quantity of parameters for the corresponding base kernel matrix is the same for each input pixel of the one or more input pixels. As another example, in some implementations, for each input pixel of the plurality of input pixels, the one or more values indicative of a spatial distribution of the parameters is the same for each input pixel of the one or more input pixels.

The neural network 530 can adapt the corresponding base kernel matrix to a particular pixel by applying a filter to the corresponding base kernel matrix to adapt the spread and influence of the parameters of the kernel matrix on the pixel. In particular, the neural network 530 can apply, for each input pixel, a filter to the corresponding base kernel matrix to generate a corresponding updated kernel matrixto be applied to an input pixel of the input image to generate a corresponding output pixel. A filter can be applied to a kernel to alter/adapt the influence of the parameters of the kernel matrix on the updated value of the pixel. That is, the neural network 530 can apply a filter to the corresponding base kernel matrix to adapt the spread and influence of the one or more parameters of the kernel matrix on the pixel. For example, the neural network 530 can apply a Gaussian filter to the corresponding base kernel matrix of the input pixel. In some implementations, the neural network 530 can apply a Sobel filter, a Prewitt filter, a Laplacian filter, or any other appropriate filters to the corresponding base kernel matrix to generate a corresponding updated kernel matrix.

To generate the corresponding updated kernel matrix, the neural network 330 can determine, using one or more neural network modules on at least a portion of the data characterizing the one or more pixels, a corresponding bandwidth for the filter. The corresponding bandwidth for the filter can control the spread and influence of the one or more parameters of the kernel matrix on the updated value of the pixel. That is, the corresponding bandwidth for the filter can dictate the effect of the one or more parameters of the base kernel matrix on the pixel by updating the weights of the base kernel matrix. For example, the corresponding bandwidth for a Gaussian filter can be a standard deviation for a Gaussian distribution. That is, the Gaussian filter can dictate the effect of the one or more parameters of the base kernel matrix on the pixel by updating the weights of the base kernel matrix via a Gaussian formula. More specifically, parameters that are further away (e.g., have larger distances) to the pixel will have less influence (if any) on the updated value of the pixel than parameters that are closer (e.g., have smaller distances) to the pixel.

The one or more neural network modules, e.g., the neural network model 342, can apply the filter to the corresponding base kernel matrix to generate the corresponding updated kernel matrix based on the kernel data 548 received by the one or more neural network modules. More specifically, the one or more neural network modules can update the one or more weights 558 of the one or more parameters of the base kernel matrix based on the determined bandwidth for the filter to generate one or more updated weights for the one or more parameters. For example, when using a Gaussian filter, the one or more neural network modules 340 can determine a standard deviation for the Gaussian distribution (e.g., the bandwidth for the Gaussian filter) and then apply the Gaussian filter to the corresponding base kernel matrix to generate the corresponding updated kernel matrix. In particular, the one or more neural network modules can apply the Gaussian filter by using the Gaussian formula, including the determined standard deviation. A Gaussian filter is described in further detail with reference to FIG. 5B.

FIG. 5B is an example Gaussian filter for generating an (updated) adaptive kernel.

As used in the disclosure, a neural network, e.g., the neural network 530 of FIG. 5, can apply a Gaussian filter to a base kernel matrix to update the weights 556 of the pixels of an image by assigning higher weights to nearby pixels and lower weights to distance ones, ensuring a smooth transition between values. In particular, Gaussian kernels can apply a Gaussian function to determine the weights 556 of a fixed quantity 552 of parameters of a base kernel matrix. By adapting a base kernel matrix using a Gaussian filter, the neural network 530 can adapt the spread of the one or more parameters on the updated value of a particular pixel. For the Gaussian filter, the neural network 530 can determine (i) the corresponding standard deviation 555 of the Gaussian formula to be applied to update the weights of the base kernel matrix. The standard deviation of the Gaussian formula can control the spread of the Gaussian kernel. In other words, the standard deviation can determine how much influence neighboring pixels have in smoothing or filtering operations. For example, a smaller standard deviation can result in a narrow kernel that preserves fine details but reduces noise less effectively. As another example, a larger standard deviation can create a wider kernel, leading to stronger smoothing but potential loss of sharp features. The Gaussian kernel 506 depicted in FIG. 5B dictates the strength and spread of the influence of the given neighboring pixel value on the final pixel value based on the distance of the neighboring pixel to the original pixel. For example, the color denotes the strength of the influence (e.g., weight), where the darker the color the stronger the influence (e.g., the light grey squares in the corner of the updated kernel have less influence, or a weaker effect, on the updated value of the given pixel than the darker grey squares who have a stronger effect). For a Gaussian kernel in particular, the distribution is continuous (e.g., the strength of the parameters is gradually decreasing as the distance increases from the center pixel), creating this smoothing effect in the output image. Each parameter of the kernel matrix has a respective weight dictated by the Gaussian formula, and more specifically, the standard deviation of the Gaussian formula.

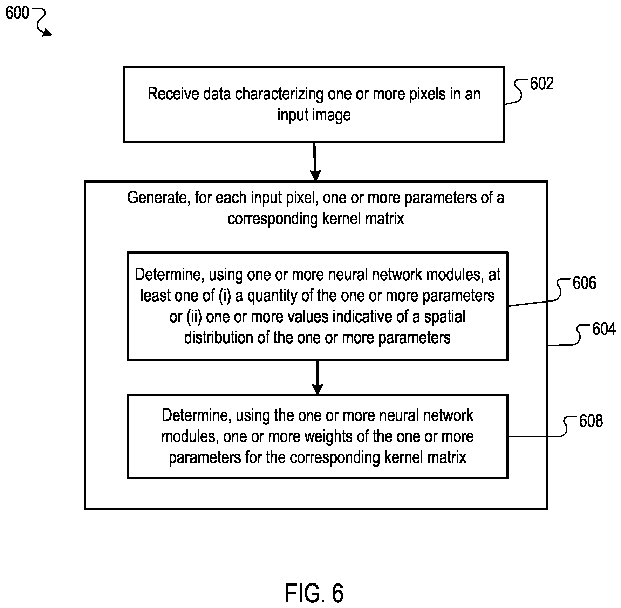

FIG. 6 is a flow diagram of an example process in accordance with implementations of the present disclosure.

For convenience, the process 600 will be described as being performed by a system of one or more computers in one or more locations. For example, a system, e.g., a system including the denoising pipeline 300 of FIG. 3, appropriately programmed in accordance with this specification can perform the process 600.

The system can receive data characterizing one or more pixels in an input image (step 602). As described in further detail with reference to FIGS. 3 and 4, a renderer can generate an image using ray tracing techniques and send the image as data characterizing one or more pixels to a neural network.

The system can generate, for each input pixel of the plurality of input pixels, one or more parameters of a corresponding kernel matrix (step 604). As described in further detail with reference to FIGS. 3 and 4, a neural network including one or more neural network modules can determine the spread and influence of the kernel matrix by determining one or more parameters of the kernel matrix.

The below steps (606-608) are sub-steps of step 604.

The system can determine, using one or more neural network modules on at least a portion of the data characterizing the plurality of pixels, at least one of (i) a quantity of the one or more parameters or (ii) one or more values indicative of a spatial distribution of the one or more parameters (step 606). As described in further detail with reference to FIGS. 3 and 4, the one or more neural network modules can determine the spread of the kernel matrix by determining one or both of (i) a quantity of the one or more parameters or (ii) one or more values indicative of a spatial distribution of the one or more parameters.

The system can determine, using the one or more neural network modules, one or more weights of the one or more parameters for the corresponding kernel matrix (step 608). As described in further detail with reference to FIGS. 3 and 4, the one or more neural network modules can determine one or more weights for the one or more parameters of the corresponding kernel matrix to adapt the influence of the one or more parameters to the local image features and structure of the pixel.

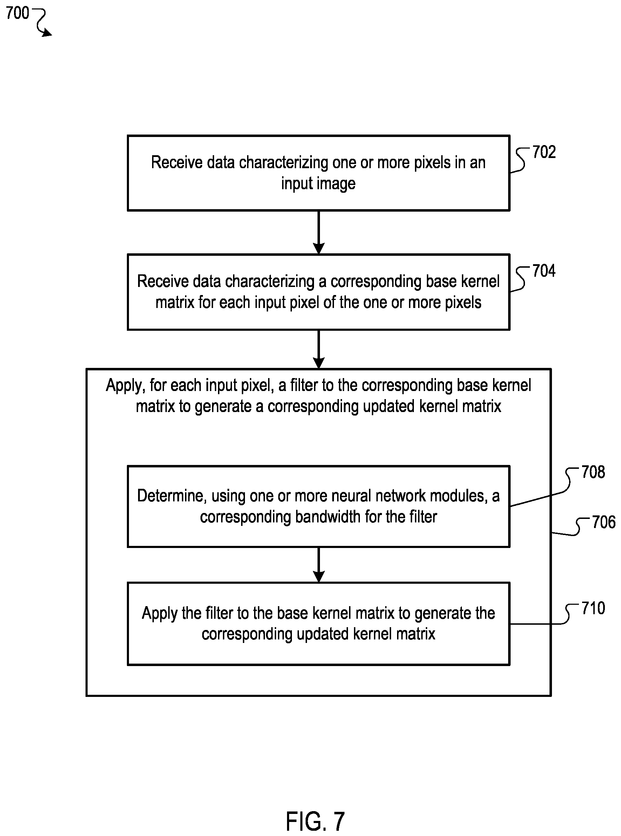

FIG. 7 is a flow diagram of an example process in accordance with implementations of the present disclosure.

For convenience, the process 700 will be described as being performed by a system of one or more computers in one or more locations. For example, a system, e.g., a system including the denoising pipeline 300 of FIG. 3, appropriately programmed in accordance with this specification can perform the process 700.

The system can receive data characterizing a plurality of pixels in an input image (step 702). As described in further detail with reference to FIGS. 3 and 5, a renderer can generate an image using ray tracing techniques and send the image as data characterizing one or more pixels to a neural network.

The system can receive data characterizing a corresponding base kernel matrix for each input pixel of the plurality of input pixels of the input image to generate a corresponding output pixel (step 704). As described in further detail with reference to FIGS. 3 and 5, the system can receive a base kernel matrix in which to adapt to the local image structure and features of the pixel. In some implementations, a neural network module of the system can generate the base kernel matrix. In some implementations, the system can receive the base kernel matrix from a neural network module of a separate system.

The system can apply, for each input pixel of the plurality of input pixels, a filter to the corresponding base kernel matrix to generate a corresponding updated kernel matrix to be applied to an input pixel of the input image (step 706). As described in further detail with reference to FIGS. 3 and 5, the system can adapt a base kernel matrix to the local image structure of a pixel by applying a filter to the base kernel matrix to generate an updated kernel matrix. In some implementations, the filter can be a Gaussian filter.

The below steps (708-710) are sub-steps of step 706.

The system can determine, using one or more neural network modules on at least a portion of the data characterizing the plurality of pixels, a corresponding bandwidth for the filter (step 708). As described in further detail with reference to FIGS. 3 and 5, the one or more neural network modules can determine the bandwidth of the filter based on a receptive field that captures the local image structure and features surrounding the pixel. By determining the bandwidth of the filter, the neural network can determine the spread and/or influence of the one or more parameters of the base kernel matrix.

The system can apply the filter to the corresponding base kernel matrix to generate the corresponding updated kernel matrix (step 710). As described in further detail with reference to FIGS. 3 and 5, the one or more neural network modules can apply the filter to the base kernel matrix to generate an updated kernel matrix that adapts to the local image structure and/or features surrounding the pixel.

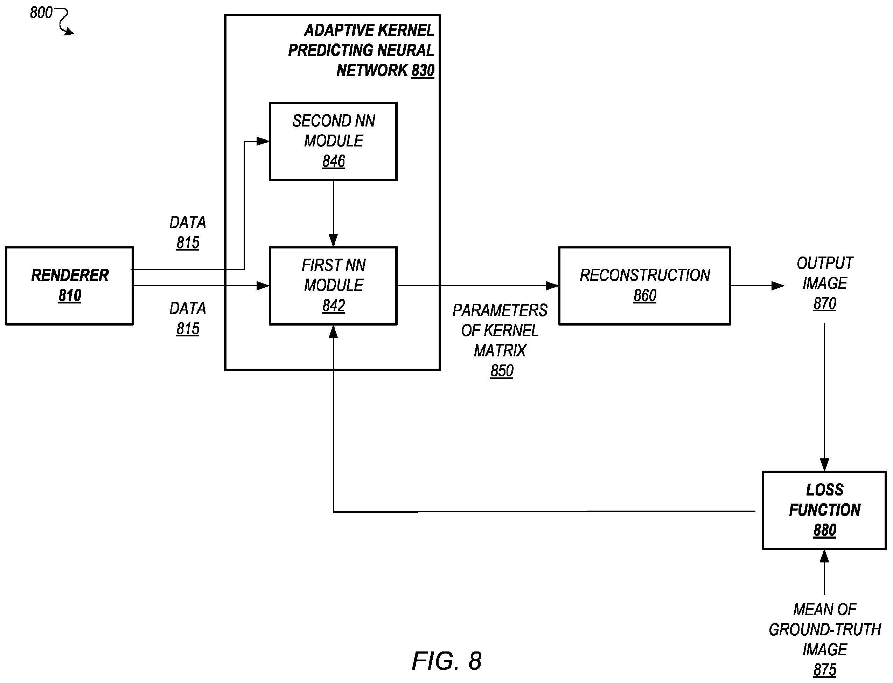

FIG. 8 is an example denoising pipeline 800, including an adaptive kernel-predicting neural network that includes two neural network modules.

As described above, in some implementations, the neural network 830 can include two neural network modules that determine the one or more parameters of the corresponding adaptive kernel matrix. For example, the adaptive kernel-predicting neural network 830 can include a first neural network module 842 and a second neural network module 846.

The second neural network module 346 can generate one or more parameters of the corresponding kernel matrix. In some cases, the second neural network module 346 can generate the corresponding base kernel matrix that is received by the first neural network module 342 that generates the corresponding updated kernel matrix (as described in more detail above with reference to FIG. 5B). In some cases, the second neural network module 346 can generate one or more of the one or more parameters of the corresponding kernel matrix. More specifically, the second neural network module 346 can determine at least one of (or in some implementations, both) (i) a quantity of parameters for the corresponding kernel matrix, or (iii) one or more values indicative of a spatial distribution of the one or more parameters of the corresponding kernel matrix.

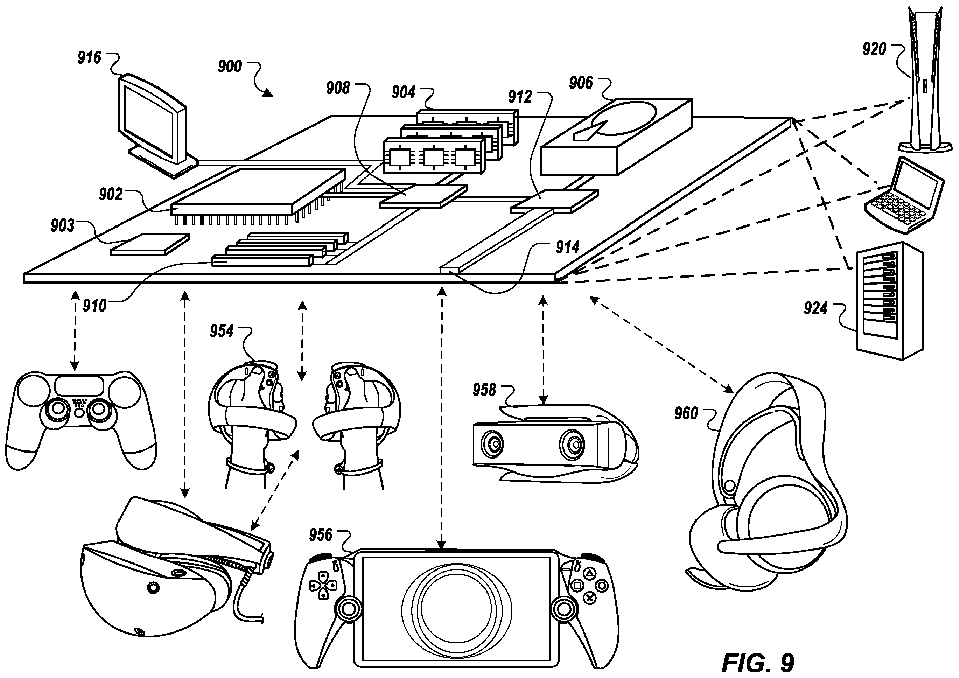

FIG. 9 shows an example of a computing device and associated accessories that can be employed to execute implementations of the present disclosure. The computing device 900 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 900 can form at least a portion of a gaming system that can include one or more remote computing devices such as ones implementing a cloud-based portal or gaming platform.

In various implementations, the computing device 900 includes some combination of one or more processors or central processing units (CPUs) 902, one or more graphic processing units (GPUs) 903, memory 904, one or more storage devices 906, a high-speed interface 908, and/or a low-speed interface 912. In some implementations, the high-speed interface 908 connects to the memory 904 and multiple high-speed expansion ports 910. In some implementations, the low-speed interface 912 connects to a low-speed expansion port 914 and the storage device 906. In some implementations, the high-speed interface 908 connects to the storage device 906. Each of the processor 902, the GPU 903, the memory 904, the storage device 906, the high-speed interface 908, the high-speed expansion ports 910, and the low-speed interface 912, are interconnected using various buses, and may be mounted on a common motherboard or in other manners as appropriate. The processor 902 can process instructions for execution within the computing device 900, including instructions stored in the memory 904 and/or on the storage device 906 to display graphical information for a graphical user interface (GUI) on an external input/output device, such as a display 916 coupled to the high-speed interface 908. In particular, the processor 902 can implement the denoising processes described in this application before displaying the (denoised) rendered image on an external input/output device. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 904 stores information within the computing device 900. In some implementations, the memory 904 is a volatile memory unit or units. In some implementations, the memory 904 is a non-volatile memory unit or units. The memory 904 may also be another form of a computer-readable medium, such as a magnetic or optical disk. In some implementations, the memory 904 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 906 is capable of providing mass storage for the computing device 900. In some implementations, the storage device 906 may be or include a computer-readable medium, such as a hard disk device, an optical disk device, a flash memory, or other similar solid-state memory device, or an array of devices, including devices in a storage area network or other configurations. In some implementations, the storage device 906 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 906 can be configured to support expandable storage via compatible non-volatile memory express (NVMe) SSDs. Instructions can be stored in an information carrier, and when executed by one or more processing devices, such as processor 902, perform one or more methods, such as those described above. The instructions can also be stored by one or more storage devices, such as non-transitory computer-readable or machine-readable mediums, such as the memory 904, the storage device 906, or memory on the processor 902. The instructions can constitute software for providing interactive game play on a user interface such as a graphical user interface (GUI) presented on the display 916.

The high-speed interface 908 manages bandwidth-intensive operations for the computing device 900, while the low-speed interface 912 manages lower bandwidth-intensive operations. Such allocation of functions is an example only. In some implementations, the high-speed interface 908 is coupled to the memory 904, the display 916 (e.g., through a graphics processor or accelerator), and to the high-speed expansion ports 910, which may accept various expansion cards. In the implementation, the low-speed interface 912 is coupled to the storage device 906 and the low-speed expansion port 914. The low-speed expansion port 914, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 950 such as a DualSense^{®}, DualShock^{®}, or Access^{™} controllers for PlayStation^{®} devices, a virtual reality (VR) or augmented reality (AR) headset 952 such as the PS VR2 headset, accessory controllers 954 such as PS VR2 Sense^{™}, a handheld gaming device 956 such as PlayStation Portal^{®}, a camera 958, and/or an earphone/headphone set 960 such as the PULSE Elite^{™} headset or the Pulse Explore^{™} earbuds. In some implementations, the computing device 900 includes one or more acoustic transducers, and/or is connected to one or more external acoustic transducers such as one or more speakers associated with the display 916.

The computing device 900 may be implemented in a number of different forms, as shown in the FIG. 9. For example, the computing device 900 may be implemented as a gaming console 920, or as one or more servers 924 or as a rack within a server. In some implementations, the computing device 900 may be implemented as a personal computer such as a laptop computer 922. In some implementations, the computing device 900 can be implemented as a mobile device such as the connected handheld gaming device 956. In some implementations, a computing device can include one or more of the computing device 900, and an entire system may be made up of multiple computing devices communicating with each other. For example, a gaming system can include one or more of a gaming console 920, one or more accessories, and a remote platform such as a cloud-based platform implemented on one or more servers 924.

The processor 902 can be implemented as a chipset of chips that include separate and multiple analog and digital processors. For example, the processor 902 can be a multi-core processor that supports high-speed processing and enables complex computational tasks, real-time physics simulations, and advanced artificial intelligence (AI) capabilities. In one example, the processor 902 includes at least 8 cores, at least 16 threads, and operates at variable frequencies around 3.5 GHz or more. In some implementations, the processor 902 may be a Complex Instruction Set Computers (CISC) processor, a Reduced Instruction Set Computer (RISC) processor, or a Minimal Instruction Set Computer (MISC) processor.

In some implementations, the GPU 903 includes a custom GPU that supports an advanced architecture such as the RDNA 2 architecture developed by AMD. In one example, the GPU 903 includes at least 36 compute units running at speeds of 2 GHz or more, and delivers performance of at least 10 teraflops. The GPU 903 can be configured to support high quality graphics rendering. For example, the GPU 903 can be configured to support hardware-accelerated ray tracing for enhanced realism in lighting and reflections, thereby providing a highly immersive gaming experience. As another example, the GPU 903 can be configured to support the denoising process described in this implementation, further enhancing the quality of the rendered image generated from the hardware-accelerated ray tracing. More specifically, the GPU 903 can be configured to support the generation of the adaptive kernel that controls the spread and/or influence of the one or more parameters of the kernel and the application of the adaptive kernel to the pixel of the rendered image.

The computing device can be configured to interact with one or more connected input/output or accessory devices in providing the gaming experience. In some implementations, the computing device communicates with a handheld controller 950-e.g., a DualSense^{®}, DualShock^{®}, or Access^{™} controller for PlayStation^{®} devices-to provide the gaming experience. In some implementations, the controller 950 features a high-fidelity haptic feedback system with one or more actuators that simulate a wide range of tactile sensations. In some implementations the controller 950 includes one or more adaptive triggers that adjust resistance based on in-game actions to provide for a realistic feel. The ergonomic design of the controller 950 can be configured to allow for comfortable use even in long gaming sessions. For example, the controller 950 can include textured grips and an optimized button layout. In some implementations, the controller 950 includes one or more of: integrated motion sensors, a high-resolution touchpad, and a built-in microphone array. The controller 950 includes an array of buttons, joysticks, and other controls that allow a user to interact with the computing device 900 to participate in interactive gameplay presented, for example, on a display device such as the display 916. The controller 950 can be powered by one or more regular or rechargeable batteries and supports both wireless and wired connectivity with the computing device 900, for example, via Bluetooth, WiFi, USB-C etc., or via a proprietary connection such as PlayStation Link^{™}. In some implementations, the controller 950 includes a light bar and player indicators for visual feedback and customization.

In some implementations, the input/output or accessory device includes a VR/AR headset 952. One example of such a headset is the PlayStation VR2 (PS VR2) headset that is configured to provide an immersive and interactive gaming experience. In some implementations, the headset 952 features dual organic light emitting device (OLED) displays with a combined resolution of 4000 x 2080 pixels-thus providing sharp visuals and a wide field of view. In some implementations, the VR/AR headset 952 includes advanced eye-tracking technology that enables foveated rendering, optimizing performance by focusing on where the user is looking. In some implementations, the headset 952 includes integrated cameras that facilitate tracking head movements without external sensors. In some implementations, the headset includes haptic feedback for tactile sensations and/or one or more acoustic transducers configured to provide a spatial sound effect to the user. The headset 952 can include an adjustable headband and cushioned padding, and can be configured to connect to the computing device 900 either over a wireless network (e.g., over a WiFi^{®} or Bluetooth^{®} connection, or a proprietary connection such as PlayStation Link^{™}) or over a wire such as a USB-C cable.

In some implementations, the headset 952 can be configured to work in conjunction with one or more accessory controllers 954 such as the PlayStation VR2 Sense^{™} controllers. The accessory controllers 954 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 954 can be configured to provide a comfortable experience even during extended gameplay. In some implementations, the accessory controllers include one or more integrated sensors (accelerometer, gyroscope, etc.) and cameras to provide motion tracking. The accessory controllers 954 can be configured to connect to the computing device 900 and/or the headset 952 over a wireless connection such as WiFi^{®} or Bluetooth^{®}.

In some implementations, the computing device 900 can be connected to a handheld gaming device 956 such as the PlayStation Portal^{®}. The handheld gaming device 956 can be configured to stream games and media from the computing device 900 via a wireless connection such as WiFi^{®} or Bluetooth^{®}. The handheld gaming device 956 includes a high-resolution screen that allows users to play games and/or stream media remotely without using the display 916 connected to the computing device 900. This allows the display to be used for other purposes while the computing device 900 facilitates gameplay on the handheld gaming device 956. In some implementations, the handheld gaming device 956 is configured to act as a streaming receiver without running games natively on the device 956 itself. This makes the handheld gaming device 956 a convenient option for playing games run on the computing device 900, while leaving a TV connected to the computing device 900 free to be used for viewing other media. The handheld gaming device 956 can include buttons and features similar to (or even same as) the controller 950, thus providing for a similar gaming experience as that with the controller 950.

In some implementations, the input/output or accessory devices can include a camera 958 and/or an earphone/headphone set 960 such as the PULSE Elite^{™} headset or the Pulse Explore^{™} earbuds. The camera 958 can be used to track user-movements, which in turn can be used as an input to an interactive game being executed on the computing device 900. The earphone/headphone set 960 can be used to provide audio feedback/output to a user from the computing device 900. In some implementations, the earphone/headphone set 960 can include a microphone configured to receive spoken inputs/instructions that in turn can be used to control an interactive game being executed on the computing device 900.

While this specification contains many specific implementation details, these should not be construed as limitations on the scope of what is being claimed, which is defined by the claims themselves, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method comprising:
receiving data characterizing a plurality of pixels in an input image; and
generating, for each input pixel of the plurality of input pixels, one or more parameters of a corresponding kernel matrix to be applied to an input pixel of the input image to generate a corresponding output pixel, wherein generating, for each input pixel of the plurality of input pixels, the one or more parameters of the corresponding kernel matrix comprises, for each input pixel of the plurality of input pixels:
determining, using one or more neural network modules on at least a portion of the data characterizing the plurality of pixels, at least one of (i) a quantity of the one or more parameters or (ii) one or more values indicative of a spatial distribution of the one or more parameters; and
determining, using the one or more neural network modules, one or more weights of the one or more parameters for the corresponding kernel matrix.

2. The method of claim 1, wherein determining, using the one or more neural network modules on at least the portion of the data characterizing the plurality of pixels, at least one of (i) the quantity of the one or more parameters or (ii) the one or more values indicative of the spatial distribution of the one or more parameters comprises:
determining (i) the quantity of the one or more parameters and (ii) the one or more values indicative of the spatial distribution of the one or more parameters.

3. The method of claim 1, wherein:
determining, using the one or more neural network modules on at least the portion of the data characterizing the plurality of pixels, at least one of (i) the quantity of the parameters or (ii) the one or more values indicative of the spatial distribution of the parameters comprises:
determining the one or more values indicative of the spatial distribution for the parameters, the one or more values indicative of the spatial distribution comprising a grid-size for the corresponding kernel matrix.

4. The method of claim 1, wherein:
determining, using the one or more neural network modules on at least the portion of the data characterizing the plurality of pixels, at least one of (i) the quantity of the parameters or (ii) the one or more values indicative of the spatial distribution of the parameters comprises:
determining the one or more values indicative of the spatial distribution for the parameters, the one or more values indicative of the spatial distribution comprising a dilation rate for the corresponding kernel matrix.

5. The method of claim 1, wherein:
determining, using the one or more neural network modules on at least the portion of the data characterizing the plurality of pixels, at least one of (i) the quantity of the parameters or (ii) the one or more values indicative of the spatial distribution of the parameters comprises:
determining the one or more values indicative of the spatial distribution for the parameters, the one or more values indicative of the spatial distribution comprising one or more learned offsets for the parameters of the corresponding kernel matrix.

6. The method of claim 1, comprising generating an output image by applying the corresponding kernel matrix to each input pixel of the plurality of input pixels to generate the corresponding output pixel.

7. The method of claim 1, wherein the one or more neural network modules is trained on a loss function comprising a regularization term based on the one or more values indicative of the spatial distribution.

8. The method of claim 1, wherein the data characterizing the plurality of pixels comprises (i) a sampled color, (ii) albedo data, (ii) surface normal data, and (iii) depth data.

9. The method of claim 1, wherein the portion of the data characterizing the plurality of pixels is a receptive field corresponding to a plurality of pixels surrounding the pixel.

10. The method of claim 1, wherein the one or more neural network modules are convolutional neural networks.

11. A method comprising:
receiving data characterizing a plurality of pixels in an input image;
receiving data characterizing a corresponding base kernel matrix for each input pixel of the plurality of input pixels of the input image to generate a corresponding output pixel; and
applying, for each input pixel of the plurality of input pixels, a filter to the corresponding base kernel matrix to generate a corresponding updated kernel matrix to be applied to an input pixel of the input image, wherein generating, for each input pixel of the plurality of input pixels, the corresponding updated kernel matrix comprises, for each input pixel of the plurality of input pixels:
determining, using one or more neural network modules on at least a portion of the data characterizing the plurality of pixels, a corresponding bandwidth for the filter; and
applying the filter to the corresponding base kernel matrix to generate the corresponding updated kernel matrix.

12. The method of claim 11, wherein:
for each input pixel of the plurality of input pixels, the data characterizing the corresponding base kernel matrix comprises a quantity of parameters of the corresponding base kernel matrix; and
the quantity of parameters is the same for each input pixel of the plurality of input pixels.

13. The method of claim 11, wherein:
for each input pixel of the plurality of input pixels, the data characterizing the corresponding base matrix comprises a quantity of parameters of the corresponding base kernel matrix; and
the one or more values indicative of a spatial distribution of the parameters is the same for each input pixel of the plurality of input pixels.

14. The method of claim 11, wherein:
the data characterizing the corresponding base kernel matrix for each input of the plurality of input pixels comprise one or more weights of one or more parameters of the corresponding base kernel matrix; and
applying the filter to the corresponding base kernel matrix to generate the corresponding updated kernel matrix comprises:
updating the one or more weights of the one or more parameters of the corresponding base kernel matrix based on the corresponding bandwidth for the filter to generate one or more updated weights for the one or more parameters.

15. The method of claim 11, wherein the filter is a Gaussian filter, and the corresponding bandwidth of the filter is a standard deviation of a Gaussian distribution.

16. The method of claim 11, comprising generating an output image by applying the corresponding kernel matrix to each input pixel of the plurality of input pixels to generate the corresponding output pixel.

17. The method of claim 11, wherein the one or more neural network modules are trained on a loss function comprising a regularization term based on the one or more values indicative of the spatial distribution.

18. The method of claim 11, wherein the corresponding base kernel matrix is generated by a second neural network module of the one or more neural network modules.

19. A system comprising:
one or more computers; and
one or more storage devices communicatively coupled to the one or more computers, wherein the one or more storage devices store instructions that, when executed by the one or more computers, cause the one or more computers to perform operations of the respective method of claim 1.

20. One or more non-transitory computer storage media storing instructions that when executed by one or more computers cause the one or more computers to perform operations of the respective method of claim 1.
